Europäisches Patentamt

European Patent Office

Office européen des brevets

(11) Publication number: **0 044 042**
**B1**

# EUROPEAN PATENT SPECIFICATION

(45) Date of publication of patent specification: **29.01.86**

(21) Application number: **81105351.1**

(22) Date of filing: **09.07.81**

(51) Int. Cl.⁴: **B 01 D 27/00**, B 01 D 27/08,
B 01 D 29/14

(54) **Filter cartridge with castellated support and process of making the same.**

(30) Priority: **14.07.80 US 167979**

(43) Date of publication of application:
**20.01.82 Bulletin 82/03**

(45) Publication of the grant of the patent:
**29.01.86 Bulletin 86/05**

(84) Designated Contracting States:
**BE CH DE FR GB IT LI NL SE**

(56) References cited:
**DE-A-2 739 290**
**FR-A-1 533 338**
**FR-A-2 075 860**
**GB-A-1 455 481**
**US-A-2 919 765**
**US-A-3 457 339**
**US-A-4 104 170**

(73) Proprietor: **PALL CORPORATION**
**Glen Cove New York 11542 (US)**

(72) Inventor: **Pall, David B.**
**Roslyn Estates**
**New York (US)**

(74) Representative: **Gudel, Diether, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz Grosse**
**Eschenheimer Strasse 39**
**D-6000 Frankfurt am Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Filter cartridges are made up of a tubular filter element whose open ends are closed off by end caps and which is supported on an internal core. The tubular filter element is of filter sheet material, which may or may not be corrugated.

Tubular filter elements can be arranged to accept fluid flow from the outside surface of the filter through the filter to the inside, or from the inside surface of the filter through the filter to the outside. If flow is from outside to inside the filter, the filter element requires support by an internal core to enhance the resistance of the filter sheet material to rupture under high pressure differentials thereacross. If the flow is from inside to outside of the filter, then the filter sheet requires support from an external sheath. To avoid problems arising from backflow in either case, both internal and external supports can be provided.

In the manufacture of tubular filter elements from one or more sheets of filter material, it is customary to fold the sheet or sheets into the form of a tube or cylinder, possibly corrugating the sheet or sheets beforehand to increase the surface area of the filter within a limited volume, and then lap the opposite ends of the sheet material in a side seam and bond the ends of the sheet together by an interposed adhesive layer. One or both of the open ends of the tube are then closed by application of end caps, which are bonded to the tube end and the internal core or external sheath, or both, if both be present. The caps are usually provided with internal and external peripheral flanges which embrace the outer surface of the end of the tube, as well as the interior of an internal core, if present, or the exterior of an external sheath, if present, retaining these within the flanges, and also aiding in ensuring a secure leak-tight seal. The end caps are provided with apertures, as required for fluid flow to or from the interior of the filter tube in fitting the filter element in the filter assembly. The end caps may be open at one or at both ends, as required by the filter assembly, being closed at one end in a T-type assembly, and open at each end in an in-line assembly. The end caps may also have portions adapted to receive and seal against a gasket or other sealing means, to ensure a tight fit with the line connection in a fluid system.

The bonding of end caps to the filter sheet material and any internal core or external sheath that may be present has always posed a difficult problem, because it is not easy to obtain a leak-tight seal throughout the bonding area. It is absolutely essential that the seal between the end caps and the filter be leak-tight, since otherwise unfiltered fluid can bypass the filter at this point, contaminating the cleaned filtrate. It is also essential in some types of assembly that there be a secure bond fixing the core and/or sheath in position against rotation with respect to the filter element and the end caps, so that torque can be applied to the end cap to turn the cartridge, without disruption of any leak-tight seal between the filter element and end cap, and also to prevent structural damage to the filter, because the filter sheet material is structurally weak. If it is necessary to rotate or adjust the position of the filter cartridge in the filter assembly, any mechanical torque has to be applied to one end cap, which means that torque has to be transmitted through a rigid structural component (such as the core or sheath;) to the other end cap, since the filter element itself is quite unable to accept any such torque.

End caps can be attached to the open ends of a filter tube and core and/or sheath by way of adhesive, but it is virtually impossible to insure the obtention of a seal that is leak-tight throughout by use of an adhesive. Moreover, an adhesive is mechanically too weak to fix the end caps to a core and/or sheath in a bond that will resist shifting or detachment upon application of torque to the end caps.

One way to avoid this is to embed the filter tube and core and/or sheath in the end cap material. This can be done in any of several ways.

It is possible to form end caps in situ on the ends of a filter cartridge, by casting them or potting them over an immersed end of the filter tube with the aid of a mold form. A thermoplastic or thermosetting resin such as a plastisol is poured into a mold of the desired end cap design. One end of the tubular filter and then the other end are dipped in turn into the resin, and then the resin is allowed to harden or cured in situ to form a hardened end cap. Such a procedure for end-capping is disclosed in U.S. patent No. 2,732,031 dated January 24, 1956 to Rabbit et al; U.S. pats. Nos. 2,771,156 and 2,934,791 to Kasten et al, dated November 20, 1956, and May 3, 1960 respectively; and U.S. patent No. 2,941,620 to Thornberg, dated June 21, 1960.

However, end caps prepared by casting normally do not conform to the necessary close tolerances and sharp definition of contour details that are readily obtained in end caps formed by injection molding. Moreover, liquid thermoplastic and thermosetting resins are unsuitable where the end caps are to be formed on tubular filters containing ultrafine filter material. The viscosity of the liquid resins commercially used for this purpose is high so that they cannot completely penetrate the pores of the filter medium to form a leak-tight seal with the filter material. If the resin has a viscosity that is sufficiently low to enable it to penetrate the pores, then an excess amount of wicking results, with the result that the liquid resin can enter a large portion of the length of the filter element, resulting in reduction of the filtering capacity of the filter material, and also poor bonding, as such resin is drawn away from the joint between the end cap and the end of the filter sheet material.

U.S. patent No. 3,013,607, dated January 19, 1961, to Jackson et al described a method of end-capping tubular filter elements wherein the thermoplastic end caps or capped discs are

3

subjected to the heat developed in an induction field of an electric induction coil in contact with the cap, to a point where the cap is so softened that the edges of the filter element can be embedded in the cap to the depth required to permanently bond the parts together. A metallic strip is applied to the edges of the filter element and the external support jacket, or the edges of the filter element and the external support jacket are coated with an electrically conductive or semi-conductive material, so as to reinforce the filter edges and enhance the heat conductivity through the edges and the end cap.

In order to avoid losing the shape of the end caps, Jackson et al can only soften the portion of the end cap where the filter material is embedded into the cap. This procedure does not produce a truly strong leak-tight seal, because the temperature reached by the metallic edges is limited to below from about 177 to 204°C. In localized heating of the end cap at such low temperature, the softened thermoplastic resin of the end cap is too viscous to wet and penetrate the pores of the filter material, with the result that the bonding is inadequate, and a faulty seal results.

In addition, the Jackson et al filter element is designed so that the edges of the filter element and the internal core are not flush, and thus the core does not join with the filter edges in making a flush fit against the end cap, to ensure a leak-tight seal.

U.S. patent No. 3,457,339 to Pall et al, dated July 22, 1969, provides a process for applying end caps to tubular filter elements with or without an internal core and/or external sheath by liquefying an inside face of a thermoplastic end cap to from about 10 to about 90% of the thickness of the end cap to be adhered to the filter tube, while cooling the outside face of the end cap to a temperature below its softening point to maintain the remainder of the end cap in a solid state; embedding all of the edges of one end of the filter material as well as the ends of any core or sheath in the liquefied face of the end cap in a leak-tight seal therewith; allowing the liquefied thermoplastic material to permeate the pores of the filter material; and hardening the liquid plastic, thereby bonding the end cap to the filter sheet and core or sheath. This procedure can be repeated for capping the other end of the filter element, and thus completing the filter cartridge.

While embedding the filter support and filter sheet material in the end cap many ensure a leak-tight and secure seal between the end cap and the filter sheet material, it does not provide sufficient mechanical strength to resist internal damage to the structure when the resulting filter cartridge is subjected to high mechanical torque. The result is the appearance of an internal radial crack at the end cap, which sometimes appears after the filter cartridge has been subjected to steam sterilization or after drying. The problem may in part arise from an inadequate bond between the support and the end cap, which leads to failure to transmit torque through an assembled filter cartridge.

US—A—2,919,765 discloses a filter cartridge, comprising a filter sheet material formed in a tube open at at least one end; a support such as an internal core or external sheath disposed in supporting relation to and substantially coextensive with the tube and supporting the filter sheet material of the tube, said support is having protrusions being anchored to an end cap; at least one end cap being attached to and extending across the open end of the tube of filter sheet material.

The filter cartridge of this prior art is using a metal wrapper to support the pleated filter material at the outside of the tube formed from said filter sheet material. For supporting the filter tube and its wrapper when molding the end cap to said structure, there are provided at the lower edge of the wrapper prongs which are shaped so that the end of the prongs rest on the bottom of a mold and the pleated filter member rests on a portion of said prongs distant from said end. In another embodiment, internally folded L-shaped prongs serve to hold the filter tube in the mold and other prongs folded to the outside of the wrapper serve to hold the structure in the mold. Although these prongs do anchor the wrapper in the end cap, they do not and are not intended to transmit a considerable mechanical torque from the end cap to the assembled filter cartridge. Moreover, they do not form a leak-tight seal after a certain lifetime, as changes in temperature will result in mechanical stresses between those parts.

Therefore, it is an object of the invention to provide a filter cartridge as outlined above and a method for making same which is enabling the transmission of a mechanical torque from the end cap to the assembled filter cartridge, thereby fixedly attaching the end cap to the support in a leak-tight seal.

To achieve this, the invention is characterized by the support having one end at the open end of the tube formed in a castellated configuration in which there are provided at least four castellations; and said end cap having embedded therein at least the castellated end of the support, with end cap material extending into and substantially filling the area between the castellations thereby fixedly attaching the end cap to the support in a leak-tight seal and enabling the transmission of a mechanical torque from the end cap to the assembled filter cartridge.

The castellations become filled with resin during casting, potting, softening or melt-bonding of the end cap to the core and/or sheath, with the result that the end cap is sufficiently well fixed to the core or sheath to enable transmission of a mechanical torque from one end cap through an assembled filter cartridge to the other end cap. A sufficient grip is developed in this way to prevent separation of the core and/or sheath from the end cap during the drying operation, and during autoclaving.

The invention also provides a process for applying an end cap to filter sheet material formed in a tube open at at least one end, and supported by a support that is substantially coextensive with the tube, such as a core or a sheath, which comprises:

(1) forming at least one end of the support in a castellated configuration with at least four castellations therebetween;

(2) embedding the castellations of the support into one face of the end cap, with end cap material extending into and substantially filling the area between the castellations; and

(3) hardening the end cap material, thereby fixedly attaching the end cap to the support in a leak-tight seal.

The preferred process of the invention for applying end caps to tubular filter sheet material and any internal and/or external support therefor comprises liquefying an inside face of a thermoplastic end cap to from about 10 to 90% of the thickness of the end cap to be adhered to the filter tube and support, while cooling the outside face of the thermoplastic end cap to a temperature below its softening point to maintain the remainder of the end cap in a solid state; at least one end of the support being formed in a castellated configuration in which at least some of the castellation define grooves therebetween; embedding all of the edges of one end of the tube of filter material and the castellated end of the tube support in the liquefied face of the end cap in a leak-tight seal therewith; allowing the liquefied thermoplastic material to substantially fill the grooves of the castellated end of the support and to permeate the pores of the filter material; and hardening the liquid plastic in the grooves and pores, thereby bonding the end cap to the filter tube and to the support in a leak-tight seal.

This process is described in U.S. patent No. 3,457,339 to Pall et al, dated July 22, 1969, the disclosure of which is hereby incorporated by reference. However any of the processes described in the patents referred to above can also be used.

Thus, the end caps can be formed *in situ* on the ends of a filter cartridge, by casting them or potting them over an immersed end of the filter tube with the aid of a mold form. A thermoplastic or thermosetting resin such as a plastisol is poured into a mold of the desired end cap design. One end of the tubular filter and then the other end are dipped in turn into the resin, and then the resin is allowed to harden or cured *in situ* to form a hardened end cap. This procedure for end-capping is disclosed in U.S. patent No. 2,732,031 dated January 24, 1956 to Rabbit et al; U.S. pats. Nos. 2,771,156 and 2,934,791 to Kasten et al, dated November 20, 1956, and May 3, 1960 respectively; and U.S. patent No. 2,941,620 to Thornberg, dated June 21, 1960, the disclosures of which are hereby incorporated by reference.

It is also possible to utilize the method of end-capping tubular filter elements described in U.S. patent No. 3,013,607, dated January 19, 1961, to Jackson et al, the disclosure of which is hereby incorporated by reference, wherein the thermoplastic end caps or capped discs are subjected to the heat developed in an induction field of an electric induction coil in contact with the cap, to a point where the cap is so softened that the edges of the filter element can be embedded in the cap to the depth required to permanently bond the parts together. A metallic strip is applied to the edges of the filter element and the external support jacket, or the edges of the filter element and the external support jacket are coated with an electrically conductive or semi-conductive material, so as to reinforce the filter edges and enhance the heat conductivity through the edges and the end cap.

The procedure can be repeated for end-capping the other end of the filter element.

When using a preformed end cap, in softening or melt-bonding, the process of the invention can be advantageously modified, and preferably is, to further ensure the formation of a leak-tight seal between the filter element, the end cap and the support, by first grinding the ends of the filter tube and the internal and/or external support until their edges are substantially of the same length and flush, so that a flush fit of the end edges of the filter tube material, core and/or external support can be effected against the end cap.

In implementing this embodiment, the apparatus employed can be that described in U.S. patent No. 3,457,339, but it is preferably so arranged as to be capable of developing a uniform melt depth over the entire end cap surface. In addition, during the step of attaching the end cap to the filter tube and support ends, the internal and external peripheral sides of the assembly are restrained by abutting copper surfaces, which prevent the resin from extruding during the impregnation of the end of the assembly, and make it possible to substantially completely fill the castellations.

The apparatus for carrying out this embodiment of the process in accordance with the invention comprises an end cap holder; means to liquefy an exposed face portion of an end cap in the holder; and means to cool a remaining unexposed face portion of the end cap to sufficiently below its liquefaction temperature to maintain it in a solid condition while the exposed face is liquid.

In a preferred embodiment of the apparatus, the end cap holder is equipped with means to cool the end cap.

In carrying out the process of the invention, using the above described apparatus, a thermoplastic filter end cap is inserted into the end cap holder, which is designed so that a close fit is maintained between the end cap and holder. The end cap holder is cooled, for example by water cooling, so that the unexposed face of the end cap in contact with the holder is cooled and thereby at all times is maintained at a temperature below its melting point and in a solid state.

The end cap is heated, for example, by a direct flame generated by a burner, preferably shaped to the contour of the end cap, to a temperature above the maximum softening point of the thermoplastic material, thereby liquefying the exposed top face of the end cap to from about 10 to about 90% and preferably from about 40 to about 60% of its thickness. The flame is then removed from the end cap, and one end of a filter element and contiguous internal support or core and/or external support or sheath whose edges are substantially even with any external and/or internal support, is then placed into the molten end cap to the desired depth, which could be up to 90% of the thickness of the end cap and preferably is no more than about 60% of the thickness of the cap. The relatively cold filter element causes the end cap material to harden in a few seconds, and wicking is thereby prevented. The filter element and end cap are allowed to remain in the end cap holder until the end cap has completely solidified, at which time a unitary structure comprised of the filter element support and end cap is formed, which can then be removed from the holder.

The means to liquefy a portion of the thickness of the end cap includes any conventional heat source which can raise the temperature of the thermoplastic material above its maximum softening point, such as a burner to produce an air or oxygen flame, hot air at a temperature well above the liquefaction point of the thermoplastic material, radiant heat, and the like. The heat source need be directed against the end cap only for that amount of time necessary to heat one face of the end cap to a temperature above its maximum softening temperature, thereby to liquefy the end cap to the desired depth. Thus, for example, where a polypropylene end cap is employed, a flame, depending upon its temperature, need be directed against the face of the end cap for from about 20 to about 60 seconds.

The process and apparatus of the invention are applicable to end capping tubular filter elements of any configuration. An end cap appropriate to the configuration of the tubular filter element is of course employed in each case. Normally, filter elements in cylindrical corrugated form are employed, but it will be apparent that the process is applicable to tubular elements in any cross-sectional configuration, including plain, folded, convoluted and corrugated triangular, square, rectangular, elliptical, and indeed any polygonal filter tubes. The size and configuration of the convolutions in the case of a corrugated element are absolutely immaterial, and so also is the thermoplastic material of which the filter element and end caps are made.

The process is applicable to tubular filter elements made of any filter material. If the material has insufficient rigidity to be self-supporting, the tube can be made so by incorporation of a central core or support, such as a spring or tube of rigid metallic or plastic material, for instance, a perforated metal core or spring of conventional construction. As indicated it will usually be desirable in such a case to have the internal support of a length substantially equal to that of the filter element so that the internal support and the edges of the filter element are in a substantially flush fit with the end cap when they are bonded thereto. The end caps can be furnished with appropriate raised or depressed portions to meet the shape requirements of the ends of the filter support and the folds or convolutions of the filter tube, and in accordance with the requirements of the filter assembly in which the filter element is to be used.

Thus, the process of the invention is applicable to filter elements made of any porous sheet material having pores extending from surface to surface. One or several layers of the same or varying porosity can be employed, in close juxtaposition, or even bonded together, or also spaced apart. Paper, which can, if desired, be resin-impregnated, is a preferred base material, since it yields an effective, versatile and inexpensive fluid-permeable filter medium. The invention is, however, applicable to papers and like sheet materials formed of any type of fiber, including not only cellulose fibers but also synthetic resin fibers, and fibers of other cellulose derivatives, including, for example, fibers of polyvinyl chloride, polyethylene, polypropylene, polyvinylidene chloride, cellulose acetate, cellulose acetate propionate, viscose rayon, polyacrylonitrile, polymers of terephthalic acid and ethylene glycol, polyamides, and protein fibers of various sorts, such as zein and the alginates, glass, asbestos, potassium titanate, mineral wool, polystyrene, rubber, casein, hemp, jute, linen, cotton, silk, wool, and mohair. Also useful, in addition to papers, are textile fabrics, and woven and nonwoven fibrous layers of all kinds, such as felts, mats and bats made of fibrous materials of any of the types listed above.

The invention is of particular application to resin filter membranes, such as polyamide, polyester, polyimide, cellulose acetate, polyethylene, polypropylene, and synthetic rubber membranes.

The filter sheet material of which the filter elements of the invention are made, if desired, can be impregnated with a synthetic resin or cellulose derivative to increase its strength and resistance to wear by the fluid being filtered. The impregnating agent can be any material useful in the impregnation of papers and textile materials. Such materials are well-known in the paper and textile arts. The impregnating agents can be in liquid form, capable of undergoing solidification as by polymerization, cross-linking or the like. They can also be in solid form, and applied to the base from a solution in an inert solvent, or as melts. Representative impregnating resins include phenol-formaldehyde resins, ureaformaldehyde resins, melamine-formaldehyde resins, polyester resins, and polyepoxide resins.

The process of the invention is particularly applicable to microporous filter elements. Microporous filter elements may be defined as having an average pore size of less than about 5 microns and preferably an average pore size of less than about 0.5 micron. There is no effective lower limit on the pore size of the microporous filter, except that imposed by the excessive pressure required to force water to pass through the filter, an unduly low rate of flowthrough, and more rapid plugging. It has been found, in practical applications, that microporous filters having an average pore size as low as 0.02 micron and even lower can be end capped in the invention.

Microporous resin membranes such as polyamide membranes are preferred.

The depth or thickness of the microporous filter is not critical. A thick filter operates efficiently, but it should not create an undue pressure drop.

A preferred microporous filter is made of a porous base, such as paper, having relatively large pores, within or on the surface of which is deposited particulate material in an amount to diminish the average diameter thereof to less than 1 micron while retaining a voids volume in the microporous portion in excess of 75%, as disclosed in U.S. patent No. 3,238,056 to Pall et al dated March 1, 1966, and U.S. patent No. 3,246,767 to Pall et al dated April 19, 1966 the disclosures of which are herein incorporated by reference. The particulate material, which can be in the form, for example, of fibers or fine structured granules, is suspended in a fluid and deposited therefrom upon the surface of the porous base material. The particulate material can all be of the same size and type, or of two or more sizes and types, all suspended in the fluid system. The desired reduction in pore diameter of the base is obtained by varying the size and amount of the particulate material deposited, blending different sizes at different points, if desired. A particularly preferred microporous filter is one of the type described in U.S. patent No. 3,246,767, which comprises a porous base having superimposed thereon and adherent thereto a microporous layer comprising a fibrous material of which a proportion of fibers extend outwardly from the porous base at an angle greater than 30°, the microporous layer having an average pore diameter of less than 1 micron and a voids volume of at least 75%. The fiber spacing and angular disposition to the base throughout the entire microporous layer is noted by cross-sectional examination, upon sufficient magnification through an optical or electron microscope. The angular disposition of the fibers is in a large measure responsible for the high voids volume and low pore size characteristic of these microporous filters.

The end caps can be of any desired configuration, appropriate to the requirements of the filter tube and filter assembly. Usually, at least one of the end caps will be provided with an aperture for delivery of filtered fluid from or unfiltered fluid to the interior of the structure. In many instances, both end caps will be apertured, particularly where a plurality of filter elements are to be connected together to form a long tube.

As is well known in the field of plastics, most thermoplastic materials have a wide range of temperatures over which they can be softened. However, it is only after the thermoplastic material is heated to a temperature above its maximum softening point that the material is liquefied. The end caps that are suitable for use herein can be made by potting or casting *in situ*, or preformed, from any thermoplastic resin that is in, or can be brought to, sufficiently softened or even a liquid state, as by heating to above its maximum softening point, to permit embedding therein of the filter sheet material and any supports therefor. If an ultrafine filter material, i.e. filter material having an average pore size less than about 5 microns, is employed, the thermoplastic material employed in the end cap preferably when liquid has a low viscosity, and preferably less than about 50 c.p., to ensure that the resin can penetrate the pores of the filter material, and thus form a leakproof seal.

The end cap resin materials can be employed alone, with conventional fillers and/or pigments and/or in solution in a suitable solvent. Typical resins which can be employed herein, their softening range, and their liquefaction temperature, are set out in the Table below. It is to be understood that the liquefaction temperature of the resins listed hereinafter varies with the molecular weight of the resins, and that the softening range listed for each resin is for the most common form of the particular resin.

# 0 044 042

| Name | TABLE<br>Softening point (°C) | Liquefaction point (°C) |
|---|---|---|
| Polyethylene | About 104 | Above 110—115 |
| Polypropylene | 140—160 | Above 160 |
| Polyisobutylene | | Above 180 |
| Polystyrene | 88—110 | Above 110 |
| Polyamides (nylon) | 232—252 | Above 252 |
| Cellulose acetate | 46—110 | Above 110 |
| Ethyl cellulose | 99—132 | Above 132 |
| Cellulose acetate butyrate | 60—121 | Above 121 |
| Copolymers of vinyl chloride and vinyl acetate | 60—66 | Above 66 |
| Polyvinyl chloride | Varies with plasticizer | |
| Polyvinylidene chloride (Saran) | 38—163 | Above 163 |
| Vinylidene chloride-vinyl chloride (90—10) copolymer (Saran) | 110—138 | Above 138 |
| Polyvinyl butyral | 60—126 | Above 70 |
| Polytrifluorochloro-ethylene (Kel-F.) | 174—299 depending on molecular weight | Depends on molecular weight |
| Polymethyl methacrylate | 60—110 | Above 110 |
| Synthetic rubbers such as hard rubber | 66—68 | Above 88 |

In addition to the above materials, other thermoplastic materials such as lignin-sulfonate resins, terpene resins, and the like can be used herein. The term "thermoplastic" is accordingly used herein to refer both to thermoplastic resins and to such resins in a liquid stage of polymerization, further polymerizable to a solid polymer.

As indicated hereinbefore, the process is applicable to filter elements made of any filter material and end caps made of any thermoplastic material. However, where the end cap and the filter material are of the same material, the seal formed between the end cap and the edges of the filter is exceptionally strong.

Similarly, if the end caps and the supports, internal and/or external core and/or sheath are of the same material, an internal structure is obtained that is exceptionally resistant to mechanical torque. The filter sheet can also be of the same material, with even better results.

Since no two materials have precisely the same chemical resistance to all media to be filtered, it has been found to be desirable to employ heat-sealed filter materials, internal core supports and end caps which are substantially of the same thermoplastic material under corrosive conditions or where contamination of the filter material, internal support core and/or end cap by the medium being filtered is a problem. Thus, for example, where a corrosive fluid is being filtered, the internal support or core filter material and end cap can be made entirely from thermoplastic resins, such as polyethylene or polypropylene or polyamide, or any of the other thermoplastic materials set forth hereinbefore, and the filter material heat-sealed. A filter element made entirely of one material is resistant to attack to a

7

wide range of reagents, hence is more widely useful than a filter element wherein a second component has been introduced, thereby limiting its range of application.

The support for the filter tube can be any of the thermoplastic materials referred to above for the end cap, and preferably is of the same material. It must in any case be melt-compatible with the end cap material.

The castellated end portions can take any castellated configuration, with alternating grooves and raised or castellated portions. The castellations should have straight sides, preferably at an angle of 90° or less with the base of the grooves, but in no case less than 30°. The angle of the base gives reentrant sides if less than 90°. The angle should not exceed 135°.

The depth of the castellations is to some extent determined by the strength or tear resistance of the support and end cap materials. The more material filling the castellations, the stronger the bond. Usually, the castellations give an adequate grip if not less than 3.17 mm. in depth. A depth exceeding 12.7 mm is not normally required.

The raised and depressed portions can be of equal or different lengths. The number is not critical, but will usually be from four to thirty-six over the 360° of the support circumference.

The preferred filter element obtained in accordance with the invention thus comprises, in combination, a filter sheet material formed in a tubular configuration having at least one open end; an end cap closing off the open end, and formed of thermoplastic resin; and a support for the filter tube, the support having at least one castellated end, and all three being of the same thermoplastic resin, the open ends of the filter sheet and support being embedded in the end cap to a depth of from about 10% to about 90% of the cap thickness, the thermoplastic cap material permeating the porous sheet material, and substantially filling the castellation grooves thereof thereby forming a continuous leak-proof matrix of thermoplastic resin at the interface between the end cap, the support and the filter sheet material, ensuring an internal structure and a leak-tight seal therebetween.

Preferred embodiments of the invention are shown in the attached drawings, in which:

Figure 1 is a side view of a filter core support in accordance with the invention having castellated ends;

Figure 2 is an end view of one castellated end of the filter core support shown in Figure 1;

Figure 3 is a side view of another embodiment of filter core support in accordance with the invention, having castellated ends with reentrant portions in the grooves thereof;

Figure 4 is an end view of one castellated end of the filter core support of Figure 3; and

Figure 5 is a side view with portions cut away of a filter cartridge in accordance with the invention, showing end caps applied to the filter core support of Figures 3 and 4, with end cap material substantially filling the castellations at each end and also penetrating the end portions of the filter tube.

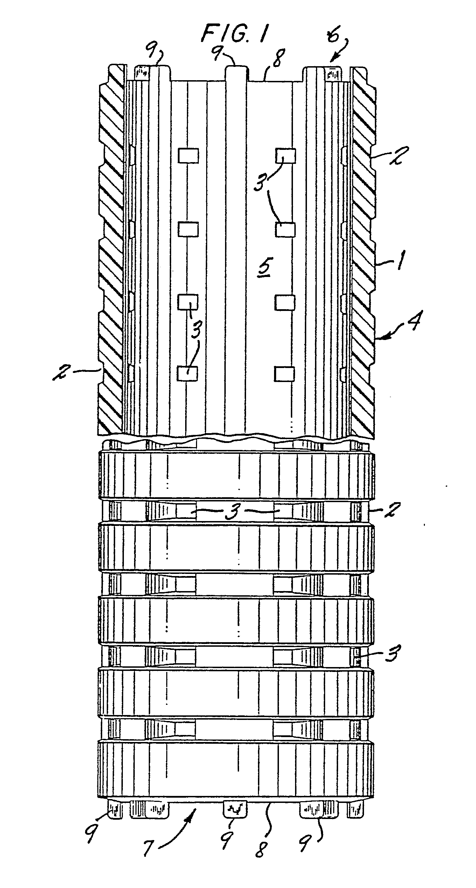

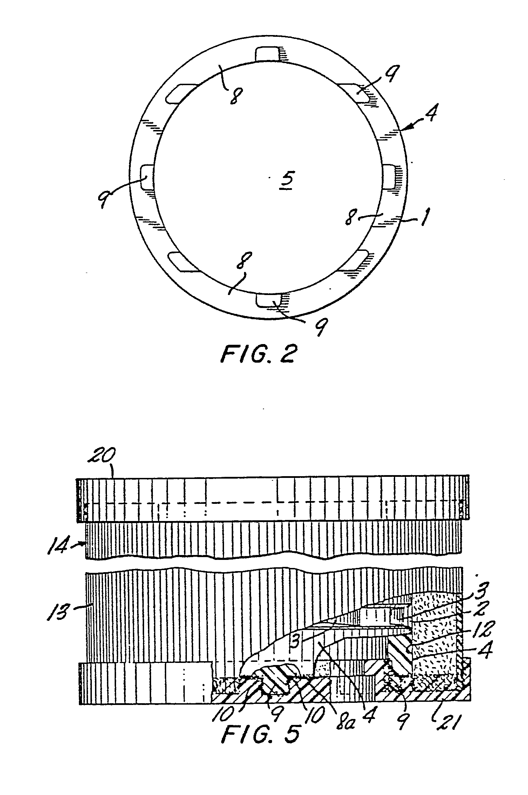

The filter core support shown in Figures 1 and 2 has a tubular body 1, formed with a plurality of circumferential grooves 2, the grooves having a number of apertures 3 through the base thereof, leading from the outside face 4 to the inside central passage 5 of the core.

Each end 6, 7 of the core is castellated, with a series of twelve castellations defining grooves 8 and raised portions 9 uniformly spaced about the end faces of the core.

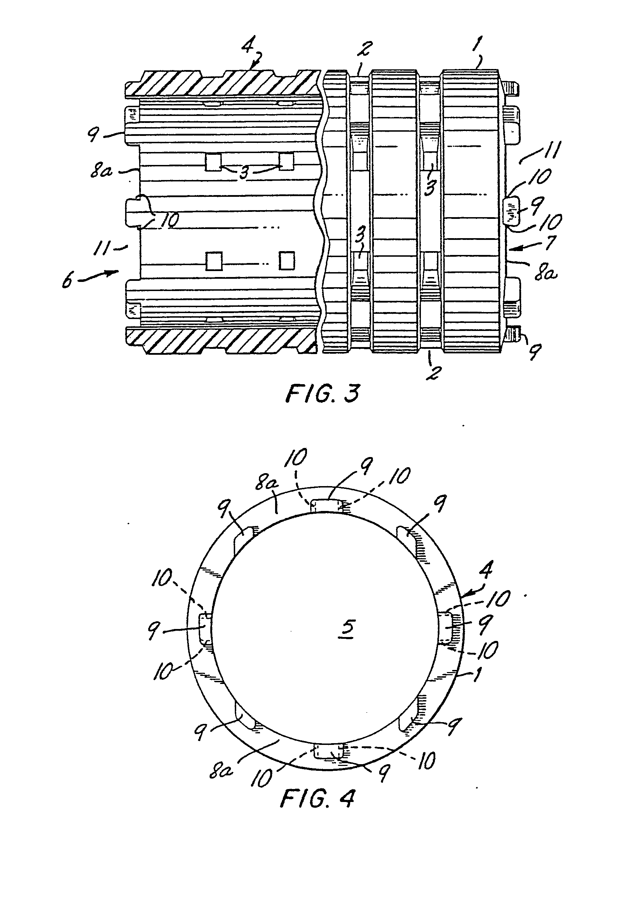

The core shown in Figures 3 and 4 is similar to that shown in Figures 1 and 2, with like reference numerals for like parts, but with the grooves 8a arranged with reentrant portions 10, widening the grooves at their base, as compared with the opening 11 at the tops of the grooves.

With the provision of the circumferential grooves 2 and apertures 3 at the base of the grooves, it becomes possible to support the inner tips 12 of the corrugations 13 of a filter tube 14, as seen in Figure 5 upon the external periphery 4 of the core without blocking flow at that point. Fluid passing through the filter sheet, although blocked from passage at the points where the filter sheet is in contact with the raised portions 9 of the face 4 of the core, can pass through at the tops of the grooves 2, enter the grooves, and then run along the grooves until it reaches one of the apertures 3, whereupon it can pass through the core 1 to the inside central passage 5 of the core.

The filter core shown in Figures 3 and 4 is represented as the internal support of a filter cartridge in Figure 5, having end caps 20, 21 fixedly attached to the core by end cap material substantially completely filling the reentrant grooves 8a of the castellated end of the core. The end caps are thus integrally keyed and thereby locked to the core, making it impossible to detach them without actual rupture of the end cap material, or the core support material.

The filter cartridge shown in Figure 5 is prepared using the apparatus shown in Figures 1 to 4 of patent No. 3,457,339.

An end cap 20 or 21 is placed in the recess 12 of the end cap holder 10 as shown, and the plate 46 is rotated about shaft 50 until burner 32 is positioned directly above the end cap holder 10. Switch 24 is then thrown to raise the end cap holder to the up position shown in Figure 2.

In Figure 2, burner 32 has been rotated about shaft 50 by means of handle 38 attached to plate 46 until it is directly over end cap holder 10. End cap holder 10 has been raised to a position in close proximity to burner head 34 by throwing foot switch 24 as described above.

A direct flame is applied to the end cap to heat the end cap to a temperature above the maximum softening point to liquefy at least a portion of the thickness thereof. The coolant is continually circulated through the end cap holder 10 via hoses 28 and 30, thereby chilling the recess 12 upon which the end cap is positioned, and consequently chilling at least a portion of the thickness of the end cap to a temperature well below its softening point. Next, the switch 24 is opened, thereby lowering the end cap holder, and the plate 46 is rotated about shaft 50 until filter element holder 48 is directly above end cap holder 10. Filter element 49, composed of a filter tube and accompanying internal core, the edges of the filter tube and core support being of substantially the same length, are inserted into filter element holder 48 and manually held in place therein.

In Figure 3, the end cap holder has been lowered and plate 46 has been rotated about shaft 50 until filter element holder 48 is directly above end cap holder 10. Filter element 49 has been inserted within filter element holder 48 and is manually held in place therein. The end cap holder is then raised by throwing switch 24 so that the edge 52 of the filter element including both the filter tube and the castellated end of the filter core are embedded in the liquefied portion of the end cap, and thereby supported by the end cap holder 10 and plate 46. The liquid thermoplastic material is allowed to permeate the pores of the filter material and the castellations of the filter core to ensure the subsequent formation of a leak-proof seal, and fix the core to the end cap in a manner to accept a considerable torque without damage to or rupture of the cartridge.

In Figure 4, the end cap holder has been raised and the edge 52 of the filter element is embedded in the liquefied portion of end cap 14 so that the thermoplastic material can permeate the pores of the filter material and the castellations of the filter core.

After the liquefied portion of the thermoplastic end cap has hardened, switch 24 is opened, thereby lowering the end cap holder and filter element embedded in the hardened end cap. The capped filter element 49 is removed from the end cap holder 10 and the procedure is repeated for the other end of the filter element.

In Figure 5 the part of the filter element in cross section shows that the thermoplastic end cap has penetrated the pores of the filter material and the castellations of the filter core and has solidified therein, thereby forming a leak-proof seal of exceptional strength. Furthermore, the end cap and core are made of the same thermoplastic resin and have been melt-bonded at the point of junction and, in essence, are one piece.

In the Figures, the filter element of the invention has been made using the process and apparatus of Figures 1 to 4 of U.S. patent No. 3,457,339. Instead of melt-bonding a preformed end cap to the filter element, it is however possible to dip the castellated support and the filter element in molten end cap material, and then permit the end cap material to harden, thus embedding the support in the end cap and forming the end cap *in situ*. In this case, a mold or pot for the molten end cap material is required, that has the external shape and configuration of the required end cap, for the filter element or cartridge. Such a procedure is disclosed in U.S. patent No.

2,732,031 dated January 24, 1956 to Rabbit et al; U.S. pats. Nos. 2,771,156 and 2,934,791 to Kasten et al, dated November 20, 1956, and May 3, 1960 respectively; and U.S. patent No. 2,941,620 to Thornberg, dated June 21, 1960. In utilizing this procedure, the filter support of course has at least one castellated end, and the end caps are formed *in situ* at each such castellated end, in sequence.

**Claims**

1. A filter cartridge comprising a filter sheet material formed into a tube (14) open at at least one end; a support (1) such as an internal core or external sheath disposed in supporting relation to and substantially coextensive with the tube (14) and supporting the filter sheet material of the tube (14), at least one open end of the tube (14) of filter sheet material having an end cap (20, 21) attached thereto and extending thereacross, said support (1) having protrusions (9) anchored to an end cap (20, 21); characterized by the support (1) having one end (6, 7) at an open end of the tube (14) formed in a castellated configuration in which there are provided at least four castellations (9); and said end cap (20, 21) having embedded therein the castellated end (6, 7) of the support (1), with end cap material extending into and substantially filling the area (8) between the castellations (9), thereby fixedly attaching the end cap (20, 21) to the support (1) in a leak-tight seal and enabling the transmission of a mechanical torque from the end cap (20, 21) to the assembled filter cartridge.

2. A filter cartridge in accordance with Claim 1 in which the end portion of the tube (14) of filter sheet material is also embedded in the end cap (20, 21).

3. A filter cartridge in accordance with Claim 1 or 2 in which the castellations (9) have reentrant sides (10).

4. A filter cartridge in accordance with any one of Claims 1 to 3, in which the edges of the filter sheet and support (1) are substantially flush prior to applying the end cap (20, 21) thereto.

5. A filter cartridge in accordance with any one of Claims 1 to 4, wherein the support (1) is an internal support core whose edges are substantially flush with the edges of the filter material.

6. A filter cartridge in accordance with any one of Claims 1 to 5, wherein the filter sheet material is a thermoplastic resin.

7. A filter cartridge in accordance with any one of Claims 1 to 6, wherein the filter sheet material includes an internal support core (1) and the filter material, internal support core (1) and end cap (20, 21) are made of the same thermoplastic material.

8. A process for applying an end cap (20, 21) to filter sheet material formed into a tube (14) open at at least one end and supported by a support (1) that is substantially coextensive with the tube, and which comprises:

(1) forming at least one end of the support (1) in a castellated configuration with at least four castellations (9) therebetween;

(2) embedding the castellations (9) of the support (1) into one face of the end cap (20, 21) with end cap material extending into and substantially filling the area (8) between the castellations (9) and

(3) hardening the end cap material, thereby fixedly attaching the end cap (20, 21) to the support (1) in a leak-tight seal.

## Patentansprüche

1. Filterpatrone mit einem rohrförmigen Filterblatt, das an wenigstens einem Ende offen ist, ferner mit einer Stütze (1), beispielsweise einem Innenkern oder Außenblatt, die das Rohr (14) stützt und sich im wesentlichen zusammen mit dem rohr (14) erstreckt und die dabei das Filterblattmaterial des Rohrs (14) stützt, wobei an wenigstens einem offenen Ende des aus dem Filterblattmaterial bestehenden Rohres eine Endkappe (20, 21) befestigt ist, die sich quer dazu erstreckt und wobei die Stütze (1) Vorsprünge (9) hat, die an der Endkappe (20, 21) verankert sind, dadurch gekennzeichnet, daß die Stütze (1) an einem offenen Ende (6, 7) des Rohres (14) zinnenförmig geformt ist mit wenigstens vier Zinnen (9) und daß das zinnenförmige Ende (6, 7) der Stütze (1) in die Endkappe (20, 21) eingebettet ist, wobei sich das Material der Endkappe in die Zinnen (9) erstreckt und das Gebiet (8) zwischen den Zinnen (9) im wesentlichen ausfüllt, wodurch die Endkappe (20, 21) fest und abgedichtet an der Stütze (1) befestigt wird und ein mechanisches Drehmoment von der Endkappe (20, 21) auf die montierte Filterpatrone übertragen werden kann.

2. Filterpatrone nach Anspruch 1, dadurch gekennzeichnet, daß auch der Endteil des Rohres (14) aus dem Filterblattmaterial in der Endkappe (20, 21) eingebettet ist.

3. Filterpatrone nach Anspruch 1 oder 2, dadurch gekennzeichnet, daß die Zinnen (9) zurückspringende Seiten (10) haben.

4. Filterpatrone nach einem der Ansprüche 1 bis 3, dadurch gekennzeichnet, daß die Kanten des Filterblatts und der Stütze (1) vor dem Aufsetzen der Endkappe (20, 21) im wesentlichen miteinander fluchten.

5. Filterpatrone nach einem der Ansprüche 1 bis 4, dadurch gekennzeichnet, daß die Stütze (1) als Innenkern ausgebildet ist, dessen Kanten im wesentlichen mit den Kanten des Filtermaterials fluchten.

6. Filterpatrone nach einem der Ansprüche 1 bis 5, dadurch gekennzeichnet, daß das Material des Filterblatts ein thermoplastisches Kunstharz ist.

7. Filterpatrone nach einem der Ansprüche 1 bis 6, dadurch gekennzeichnet, daß das Filterblattmaterial einen inneren Stützkern (1) einschließt und daß das Filtermaterial, der innere Stützkern (1) und die Endkappe (20, 21) aus demselben thermoplastischen Material bestehend.

8. Verfahren zum Anbringen einer Endkappe (20, 21) an einem Filterblattmaterial, das an wenigstens einem Ende als offenes Rohr (14) geformt ist und das von einer Stütze (1) gestützt ist, die sich im wesentlichen zusammen mit dem Rohr erstreckt, dadurch gekennzeichnet, daß

(1) wenigstens ein Ende der Stütze (1) zinnenförmig geformt wird mit wenigstens vier Zinnen (9),

(2) daß die Zinnen (9) der Stütze (1) in eine Seite der Endkappe (20, 21) eingebettet werden, wobei das Material der Endkappe sich in die Zinnen (9) erstreckt und das Gebiet (8) zwischen den Zinnen (9) im wesentlichen ausfüllt, und daß

(3) das Material der Endkappe ausgehärtet wird, wobei die Endkappe (20, 21) leckdicht mit der Stütze (1) verbunden wird.

## Revendications

1. Cartouche de filtration comprenant une feuille de filtration mise sous forme d'un tube (14) ouvert à une extrémité au moins, un support (1) tel qu'une âme interne ou une gaine externe supportant le tube (14) et supportant la feuille du tube (14) et ayant pratiquement la même longueur que le tube, une extrémité ouverte au moins du tube (14) de la feuille ayant un capuchon d'extrémité (20, 21) qui y est fixé et qui ferme cette extrémité, le support (1) ayant des saillies (9) qui sont fixées à un capuchon d'extrémité (20, 21), caractérisée en ce que le support (1) a une première extrémité (6, 7) à l'extrémité ouverte du tube (14) qui a une configuration crénelée comportant au moins quatre créneaux (9), et le capuchon d'extrémité (20, 21) contient l'extrémité crénelée (6, 7) du support (1) qui y est enrobée, la matière du capuchon d'extrémité pénétrant dans les créneaux (8) délimités entre les dents (9) et les remplissant pratiquement, si bien que le capuchon d'extrémité (20, 21) est fixé à demeure sur le support (1) en formant un joint étanche et permet la transmission d'un couple mécanique du capuchon d'extrémité (20, 21) à la cartouche montée de filtration.

2. Cartouche de filtration selon la revendication 1, dans laquelle la partie d'extrémité du tube (14) de la feuille de filtration est aussi enrobée dans le capuchon (20, 21).

3. Cartouche de filtration selon l'une des revendications 1 et 2, dans laquelle les dents (9) ont des côtés rentrants (10).

4. Cartouche de filtration selon l'une quelconque des revendications 1 à 3, dans laquelle les bords de la feuille de filtration et du support (1) sont pratiquement au même niveau avant application du capuchon d'extrémité (20, 21).

5. Cartouche de filtration selon l'une quelconque des revendications 1 à 4, dans laquelle le support (1) est une âme interne dont les bords sont pratiquement au niveau des bords de la matière de filtration.

6. Cartouche de filtration selon l'une quelconque des revendications 1 à 5, dans laquelle la matière de la feuille de filtration est une résine thermoplastique.

7. Cartouche de filtration selon l'une quelconque des revendications 1 à 6, dans laquelle la matière de la feuille de filtration comprend une âme interne de support (1) et la matière de filtration, l'âme interne de support (1) et le capuchon d'extrémité (20, 21) étant formés de la même matière thermoplastique.

8. Procédé d'application d'un capuchon d'extrémité (20, 21) sur une feuille de filtration mise sous forme d'un tube (14) ouvert à une extrémité au moins et supporté par un support (1) qui a pratiquement la même longueur que le tube, et qui comprend

(1) la formation d'au moins une extrémité du support (1) avec une configuration crénelée ayant au moins quatre dents (9),

(2) l'enrobage des dents (9) du support (1) dans une face du capuchon d'extrémité (20, 21), la matière du capuchon pénétrant dans les créneaux (8) formés entre les dents (9) et les remplissant pratiquement, et

(3) le durcissement de la matière du capuchon d'extrémité, avec fixation à demeure du capuchon d'extrémité (20, 21) sur le support (1) de cette manière avec formation d'un joint étanche.

FIG. 1

FIG. 2

FIG. 5

FIG. 3

FIG. 4